# EUROPÄISCHE PATENTSCHRIFT

(11) **EP 2 072 768 B1**
(45) Veröffentlichungstag und Bekanntmachung des Hinweises auf die Patenterteilung: **01.03.2017**
(21) Anmeldenummer: 08167609.0
(22) Anmeldetag: 27.10.2008
(51) Int. Cl.: F01M 11/03, B01D 35/153, B01D 35/16, F02M 37/22, F16N 39/06, B01D 35/147

(54) **Ölfilter eines Verbrennungsmotors und Filterpatrone für den Ölfilter**
Oil filter of a combustion engine and filter cartridge for the oil filter
Filtre à huile d'un moteur à combustion interne et cartouche de filtre pour le filtre à huile

(30) Priorität: 20.12.2007 DE 202007017964 U
(43) Veröffentlichungstag der Anmeldung: 24.06.2009
(73) Patentinhaber: MANN+HUMMEL GmbH, 71638 Ludwigsburg (DE)
(72) Erfinder: Loos, Rainer, 71691 Freiberg (DE)

(56) Entgegenhaltungen:
- EP-A- 0 839 563
- EP-A- 1 110 590
- WO-A-02/11854
- DE-A1- 19 635 777
- DE-U-202007 006 385

## Beschreibung

### Technisches Gebiet

Die Erfindung betrifft einen Ölfilter eines Verbrennungsmotors insbesondere für Kraftfahrzeuge mit den Merkmalen nach dem Oberbegriff des Anspruchs 1.

### Stand der Technik

Aus der EP 1 674 142 A1 ist ein Ölfilter eines Verbrennungsmotors bekannt, wobei im Innenraum seines Filtergehäuses eine auswechselbare Filterpatrone angeordnet ist. Des Weiteren ist das Filtergehäuse an seinem in Schwerkraftrichtung unteren Ende mit einem Ablaufventil versehen, mittels dessen das Filtergehäuse beim Wechsel der Filterpatrone geleert werden kann. In einem Ventilsitz des Ablaufventils ist ein koaxial zur Längsachse des Ölfilters verschiebbarer Ventilkörper angeordnet, der mit einer Endscheibe der Filterpatrone verrastet ist.

Bei der Ölfilterwartung wird das untere Gehäuseteil des Filtergehäuses abgeschraubt und nach unten abgezogen, während die Filterpatrone zunächst in ihrer Betriebsposition am oberen Gehäuseteil verbleibt. Beim Abziehen des unteren Gehäuseteils wird der mit der Filterpatrone verrastete Ventilkörper in einer zum Innenraum des Filtergehäuses hin weisenden Öffnungsrichtung relativ zum Ventilsitz verschoben, wodurch das Ablaufventil geöffnet wird. Das sich im Innenraum des Filtergehäuses befindliche Öl läuft durch das geöffnete Ablaufventil kontrolliert ab. Anschließend kann die Filterpatrone ausgewechselt werden.

Der Zusammenbau erfolgt in umgekehrter Reihenfolge: Bei axialem Aufschieben des Gehäuseunterteils wird der mit der Filterpatrone verrastete Ventilkörper in der entgegengesetzt zur Öffnungsrichtung liegenden Schließrichtung in den Ventilsitz des Ablaufventils bis an einen axialen Anschlag hineingeschoben.

Da der Ventilkörper beim Öffnen des Filtergehäuses infolge seiner Clipsverbindung mit der Filterpatrone aus seinem Ventilsitz herausgezogen wird und an der Filterpatrone verbleibt, kann der Benutzer den Ventilkörper von der gebrauchten Filterpatrone abziehen und zusammen mit einer neuen Filterpatrone erneut einsetzen. Dies setzt voraus, dass der Ventilkörper einschließlich seiner Dichtringe mit aufwändigen Maßnahmen für eine hohe Lebensdauer ausgelegt werden muss. Im Übrigen kann nicht sichergestellt werden, dass nach mehrfacher Wiederbenutzung des Ventilkörpers Beschädigungen der Dichtringe ausbleiben und eine dauerhafte Öldichtigkeit erhalten bleibt.

Des Weiteren ist die Endscheibe der Filterpatrone im Bereich der Rastverbindung für den Ventilkörper massiv ausgebildet. Hierdurch wird eine öldichte Trennung des Innenraums der Filterpatrone von seiner Außenseite herbeigeführt. Über das Ablaufventil des Filtergehäuses kann zwar das auf der Rohseite der Filterpatrone befindliche Öl abgelassen werden. Auf ihrer Innenseite, also auf ihrer Reinseite befindet sich jedoch weiteres Öl, welches nicht abfließen kann. Bei der Entnahme der gebrauchten Filterpatrone muss erhöhtes Augenmerk darauf gerichtet werden, dass kein Altöl aus der Filterpatrone verschüttet wird.

Des Weiteren beschreibt die EP 1 110 590 A2 einen Flüssigkeitsfilter mit einem Ablassventil für Flüssigkeitsrückstände. Das Ablassventil weist einen über eine Ventilstange und einen Stützkörper mit einer auswechselbaren Filterpatrone verbundenen Ventilkörper auf.

Der Erfindung liegt die Aufgabe zugrunde, einen gattungsgemäßen Ölfilter derart weiterzubilden, dass die Funktionssicherheit des Ablaufventils verbessert ist.

Diese Aufgabe wird durch einen Ölfilter mit den Merkmalen des Anspruchs 1 gelöst.

### Offenbarung der Erfindung

Es wird ein Ölfilter vorgeschlagen, bei dem der Ventilkörper des Ablaufventils in der Schließrichtung aus dem Filtergehäuse herausdrückbar ist. Der Ventilkörper bildet zusammen mit der zugehörigen Filterpatrone eine zum gemeinsamen Auswechseln vorgesehene Wartungseinheit. Bevorzugt ist der Ventilkörper axial lösbar und insbesondere klemmend in einer Aufnahme der Filterpatrone gehalten. Hierdurch ist es beim Filterwechsel möglich, dass sich der Ventilkörper bei der Abnahme des Gehäuseunterteils von der Filterpatrone trennt und im Gehäuseunterteil zunächst verbleibt. Der Benutzer ist gezwungen, eine neue Wartungseinheit mit neuer Filterpatrone und neuem Ventilkörper einzusetzen. Beim Einsetzen wird der neue Ventilkörper in der Schließrichtung in den Ventilsitz hineingeschoben, während gleichzeitig der alte, noch darin befindliche Ventilkörper - ebenfalls in der Schließrichtung - aus seinem Ventilsitz herausgedrückt wird. Hierdurch ist ein Missbrauch des alten, gebrauchten Ventilkörpers in Form einer Mehrfachbenutzung vermieden. Das Auswechseln der Wartungseinheit ist einfach und erfordert keine besondere Sachkenntnis. Der stets neue eingesetzte Ventilkörper kann einfach und kostengünstig hergestellt sein, wobei dauerhaft eine Öldichtigkeit sichergestellt ist. Zuverlässigkeit und Funktionssicherheit sind erhöht.

In vorteilhafter Weiterbildung bildet der Ventilkörper zusammen mit einem Dichtsitz der Filterpatrone ein Entleerventil für eine Innenseite der Filterpatrone. Zweckmäßig ist dabei die Aufnahme für den Ventilkörper durch den Dichtsitz der Filterpatrone gebildet, wobei der Ventilkörper mittels eines Dichtringes klemmend und im Übrigen frei herausziehbar in der Aufnahme der Filterpatrone gehalten ist. Dadurch, dass der Ventilkörper beim Öffnen des Filtergehäuses aus der Aufnahme bzw. dem Dichtsitz der Filterpatrone herausgezogen wird, wird auch das Entleerventil der Filterpatrone geöffnet. Das auf der reinseitigen Innenseite der Filterpatrone befindliche Öl kann durch das Entleerventil der Filterpatrone gemeinsam mit dem rohseitigen Öl durch das Ablaufventil aus dem Innenraum des Filtergehäuses ablaufen. Eine nahezu vollständige Entleerung ist möglich. Die gebrauchte Filterpatrone kann ohne die Gefahr des Verschüttens von Öl und dabei ohne besondere Aufmerksamkeit ausgewechselt werden.

In bevorzugter Weiterbildung weist der Ventilsitz des Ablaufventils eine auf den Ventilkörper in der Öffnungsrichtung einwirkende Rückhalteeinrichtung auf. Zunächst wird der Ventilkörper beim Öffnen des Filtergehäuses in der Öffnungsrichtung relativ zu seinem Ventilsitz bewegt. Diese Bewegung ist jedoch durch die Rückhalteeinrichtung limitiert, so dass der Ventilkörper nicht aus seinem Ventilsitz herausrutschen kann. Vielmehr führt ein weiteres Öffnen bzw. Abziehen des Gehäuseunterteils dazu, dass der an der Rückhalteeinrichtung gehaltene Ventilkörper aus der Aufnahme der Filterpatrone herausgezogen wird und im Filtergehäuse verbleibt. Hierdurch ist eine zuverlässige Trennung des Ventilkörpers von der Filterpatrone bei gleichzeitig zuverlässiger Öffnung des Entleerventils sichergestellt, ohne dass der Benutzer besonderes Augenmerk auf die Lage des Ventilkörpers richten muss.

Die Rückhalteeinrichtung ist bevorzugt durch mindestens eine Federzunge gebildet. Bei konstruktiv einfachem Aufbau ist eine hohe Funktionssicherheit gewährleistet, indem ein neuer Ventilkörper zwar leicht in seinem Ventilsitz eingefädelt, nicht jedoch in Gegenrichtung herausgezogen werden kann.

In einer bevorzugten Ausführungsform weist der Ventilsitz des Ablaufventils eine Ablauföffnung auf, die bei Anlage des Ventilkörpers an der Rückhalteeinrichtung geöffnet ist. Hierdurch kann das Öl ungehindert austreten, ohne dass der Ventilkörper übermäßig weit oder gar vollständig aus seinem insbesondere zylindrischen Dichtsitz herausgezogen werden muss.

### Kurze Beschreibung der Zeichnungen

Ein Ausführungsbeispiel der Erfindung ist nachfolgend anhand der Zeichnung näher beschrieben. Es zeigen:
Figur 1 in schematischer Querschnittsdarstellung einen erfindungsgemäßen Ölfilter im Bereich seines Ablaufventils mit eingesetzter Filterpatrone und Ventilkörper im Betriebszustand;
Figur 2 die Anordnung nach Figur 1 bei teilweise gelöstem Gehäuseunterteil und geöffnetem Ablaufventil;
Figur 3 die Anordnung nach den Figuren 1 und 2 bei weiter gelöstem Gehäuseunterteil und zusätzlich geöffnetem Entleerventil der Filterpatrone;
Figur 4 das abgenommene Gehäuseunterteil des Ölfilters nach den

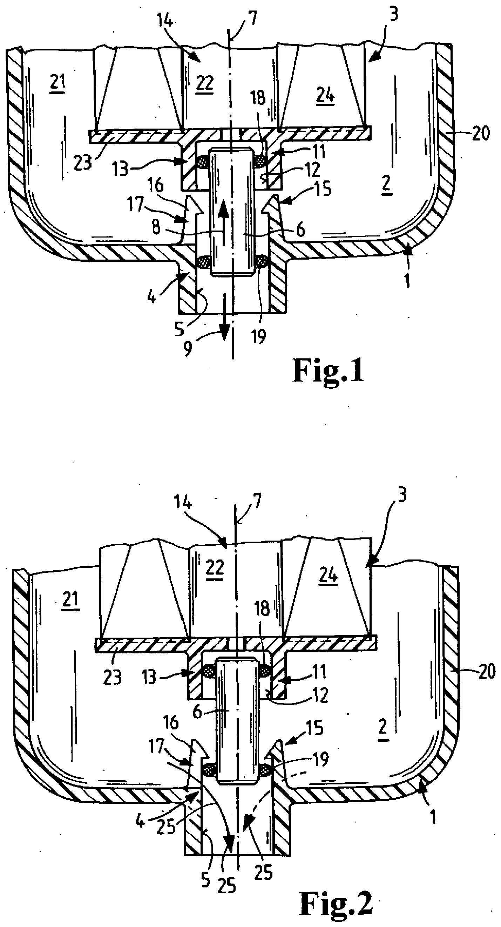

Figuren 1 bis 3 mit darin feststeckendem Ventilkörper beim Ansetzen einer neuen Wartungseinheit mit einer neuen Filterpatrone und einem neuen Ventilkörper;

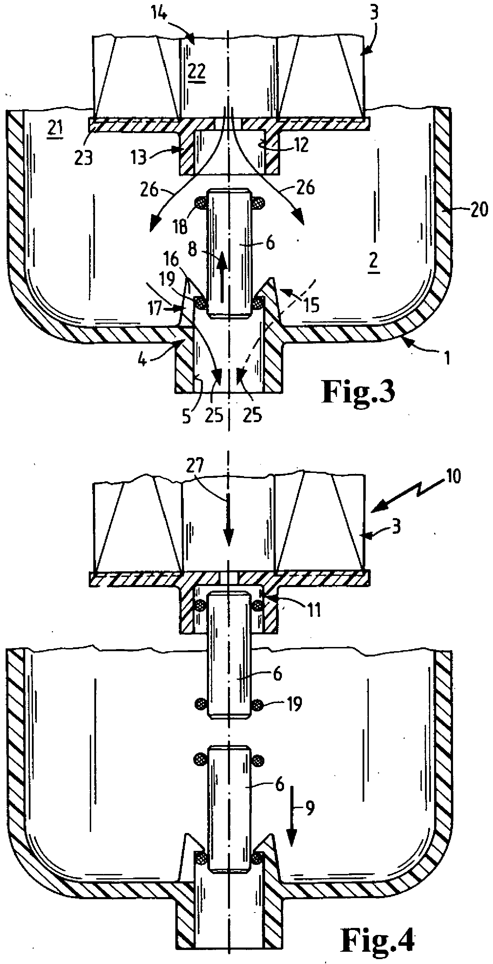

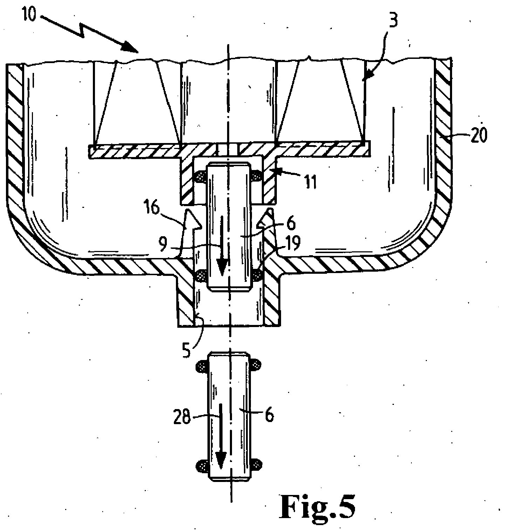

Figur 5 die Anordnung nach Figur 4 mit eingesetzter neuer Wartungseinheit und herausgedrücktem alten Ventilkörper des Ablaufventils.

### Ausführungsform(en) der Erfindung

Fig. 1 zeigt in einer schematischen Querschnittsdarstellung einen erfindungsgemäßen Ölfilter eines Verbrennungsmotors insbesondere für Kraftfahrzeuge im Bereich seines in Schwerkraftrichtung unten liegenden Endes. Der Ölfilter umfasst ein Filtergehäuse 1, von dem nur der untere Bereich eines abnehmbaren Gehäuseunterteils 20 dargestellt ist. In einem Innenraum 2 des Filtergehäuses 1 ist eine auswechselbare Filterpatrone 3 angeordnet. Das Filtergehäuse 1 ist einschließlich seiner weiter unten näher beschriebenen Komponenten ebenso wie die Filterpatrone 3 koaxial zu einer Längsachse 7 aufgebaut und dabei im Wesentlichen rotationssymmetrisch ausgebildet.

An seinem in Schwerkraftrichtung untersten Ende ist das Filtergehäuse 1 mit einem Ablaufventil 4 versehen, welches auf der Längsachse 7 liegt. Das Ablaufventil 4 umfasst einen in das Gehäuseunterteil 20 eingeformten zylindrischen Dichtsitz 5, in dem ein koaxial zur Längsachse 7 verschiebbarer Ventilkörper 6 mit einem umlaufenden Dichtring 19 an seinem unteren Ende gehalten ist. Der Ventilkörper 6 ist in einer koaxial zur Längsachse 7 liegenden, zum Innenraum 2 hin weisenden Öffnungsrichtung 8 sowie in einer entgegengesetzt verlaufenden Schließrichtung 9 im Ventilsitz 5 verschiebbar.

Die Filterpatrone 3 umfasst einen etwa zylindrischen Filterkörper 24, der an seiner unteren, dem Ablaufventil 4 zugewandten Stirnseite mit einer Endscheibe 23 versehen ist. Durch die Endscheibe 23 ist eine radiale Innenseite 14 der Filterpatrone 3 strömungstechnisch von der Außenseite getrennt. Die Außenseite bildet eine Rohseite 21 der Filterpatrone 3, während die Innenseite 14 eine Reinseite 22 bildet. Durch die strömungstechnische Trennung der Rohseite 21 von der Reinseite 22 ist der bei der Rohseite 21 ankommende Ölstrom gezwungen, radial von außen durch den Filterkörper 24 hindurch nach innen zur Reinseite 22 hindurchzutreten, wobei der Ölstrom filtriert wird.

An der Endscheibe 23 ist auf ihrer axialen Außenseite eine zylindrische Aufnahme 11 einteilig angeformt. An seinem der Filterpatrone 3 zugewandten Ende ist der Ventilkörper 6 mit einem weiteren umlaufenden Dichtring 18 versehen. Der Ventilkörper 6 ist mit diesem Dichtring 18 in die zylindrische Aufnahme 11 in der Öffnungsrichtung 8 eingesteckt und dabei mittels des Dichtrings 18 klemmend gehalten.

Die Aufnahme 11 ist zum Ablaufventil 4 hin offen, so dass der Ventilkörper 6 in der Schließrichtung 9 unter Überwindung der Klemmkraft des Dichtringes 18 aus der Aufnahme 11 axial herausgezogen werden kann. In der Gegenrichtung ist durch die Endscheibe 23 ein Anschlag für den Ventilkörper 6 gebildet, so dass dieser nicht in die Innenseite 14 der Filterpatrone 3 eingedrückt werden kann. Darüber hinaus bildet die Aufnahme 11 einen zylindrischen Dichtsitz 12 eines Entleerventils 13 der Filterpatrone 3, durch das die Innenseite 14 der Filterpatrone 3 beim Öffnen des Entleerventils 13 entleert werden kann. Das Ablaufventil 4 des Ölfilters bzw. des Filtergehäuses 1 und das Entleerventil 13 der Filterpatrone 3 greifen demnach bei ihrer Funktion auf den gleichen Ventilkörper 6 zurück.

Der zylindrische Ventilsitz 5 des Ablaufventils 4 ist zur Außenseite des Filtergehäuses 1 hin durchgängig und offen, so dass der Ventilkörper 6 bei Bedarf in der Schließrichtung 9 aus seinem Ventilsitz 5 und aus dem Filtergehäuse 1 herausgedrückt werden kann. In Gegenrichtung, also in der Schließrichtung 8 weist der Ventilsitz 5 eine Rückhalteeinrichtung 15 für den Ventilkörper 6 auf, die im gezeigten Ausführungsbeispiel durch in Umfangsrichtung verteilte Federzungen 16 gebildet ist. Demnach kann der Ventilkörper 6 in der Öffnungsrichtung 8 nur so weit verschoben werden, bis er mit dem an seinem unteren Ende befindlichen Dichtring 19 oder einem anderen Anschlag an radial nach innen hervorstehenden Nasen der Federzungen 16 anliegt. In Umfangsrichtung verteilt sind zwischen den einzelnen Federzungen 16 mehrere Ablauföffnungen 17 angeordnet, die den zylindrischen Ventilsitz 5 radial durchstoßen. Bei Bedarf kann durch diese Ablauföffnungen 17 hindurch das sich im Innenraum 2 des Filtergehäuses 1 befindliche Öl wie nachfolgend beschrieben abgelassen werden.

Fig. 1 zeigt den Ölfilter im Betriebszustand, wobei das obere Ende des Ventilkörpers 6 mit seinem Dichtring 18 dichtend im Dichtsitz 12 des Entleerventils 13 liegt. Die Endscheibe 23 ist damit strömungstechnisch geschlossen, so dass der geförderte Ölstrom von der Rohseite 21 durch den Filterkörper 24 hindurch zur Reinseite 22 strömt. Der am unteren Ende des Ventilkörpers 6 angeordnete Dichtring 19 liegt in seinem Ventilsitz 5 unterhalb der Ablauföffnungen 17, demnach das Ablaufventil 4 geschlossen ist. Es kann kein Öl vom Innenraum 2 zur Außenseite des Filtergehäuses 1 gelangen.

Die Fig. 2 bis 5 zeigen in Phasenbildern den Vorgang des Auswechselns der Filterpatrone 3. Nach Fig. 2 ist das Gehäuseunterteil 20 teilweise gelöst und relativ zur Filterpatrone 3 nach unten bewegt. Die am nicht dargestellten Gehäuseoberteil gehaltene Filterpatrone 3 hat ihre Position gegenüber der Darstellung nach Fig. 1 nicht verändert. Die Klemmkraft des Ventilkörpers 6 mit seinem Dichtring 18 in der Aufnahme 11 ist derart bemessen, dass auch der Ventilkörper 6 seine Relativposition zur Filterpatrone 3 nicht geändert hat, in dessen Folge sein unteres Ende mit dem umlaufenden Dichtring 19 relativ zur Betriebsposition nach Fig. 1 in seinem Ventilsitz 5 in der Öffnungsrichtung 8 nach oben verschoben ist. Hierbei liegt der Dichtring 19 oberhalb der Unterkante der Ablauföffnungen 17, demnach diese geöffnet sind. Das sich im Innenraum 2 des Filtergehäuses 1 auf der Rohseite 21 befindende Öl kann - wie durch Pfeile 25 dargestellt - durch die Ablauföffnungen 17 des Ablaufventils 4 ablaufen. Das Entleerventil 13 der Filterpatrone 3 ist weiterhin verschlossen, so dass sich weiterhin Öl in der reinseitigen Innenseite 14 der Filterpatrone 3 befindet.

Im nächsten Schritt wird - wie in Fig. 3 dargestellt - das Gehäuseunterteil 20 weiter nach unten abgezogen, bis der Ventilkörper 6 mit seinem unteren Dichtring 19 an der Rückhalteeinrichtung 15 bzw. an den radial inneren Nasen der Federzungen 16 anliegt. Die Ablauföffnungen 17 sind weiterhin geöffnet. Da jedoch die Relativbewegung des Ventilkörpers 6 zum Gehäuseunterteil 20 in der Öffnungsrichtung 8 mittels der Rückhalteeinrichtung 15 begrenzt ist, führt ein weiteres Abziehen des Gehäuseunterteils 20 nach unten dazu, dass das obere Ende des Ventilkörpers 6 mit seinem umlaufenden Dichtring 18 aus dem Dichtsitz 12 herausgezogen wird. Das Entleerventil 13 ist geöffnet, demnach das sich im Innenraum 14 auf der Reinseite 22 befindliche Öl entsprechend Pfeilen 26 durch das Entleerventil 13 ausströmen und gemeinsam mit dem übrigen Restöl der Rohseite 21 durch die Ablauföffnungen 17 des Ablaufventils 4 entsprechend den Pfeilen 25 ablaufen kann.

Nachdem das Filtergehäuseunterteil 20 und die Filterpatrone 3 entleert sind, wird entsprechend der Darstellung nach Fig. 4 eine neue Wartungseinheit 10 in Richtung eines Pfeiles 27, also parallel zur Schließrichtung 9 eingesetzt. Die Wartungseinheit 10 umfasst eine neue Filterpatrone 3 mit einem in ihrer Aufnahme 11 gehaltenen neuen Ventilkörper 6. Beim Einsetzen der neuen Wartungseinheit 10 wird der darin gehaltene neue Ventilkörper 6 entsprechend der Darstellung nach Fig. 5 in der Schließrichtung 9 in den Ventilsitz 5 hineingeschoben, wobei der entsprechend der Darstellung nach Fig. 4 darin noch befindliche alte Ventilkörper 6 in Richtung eines Pfeils 28 (Fig. 5), also in der Schließrichtung 9, aus dem Ventilsitz 5 des Gehäuseunterteils 20 herausgedrückt wird. Die Federzungen 16 weisen in der Schließrichtung 9 wirkende Schrägen auf, demnach der neue Ventilkörper 6 mit seinem unteren Dichtring 19 in den Ventilsitz 5 hineingeschoben, entsprechend der Darstellung nach den Fig. 2 und 3 jedoch nicht wieder in der Öffnungsrichtung 8 herausgezogen werden kann.

Die derart vormontierte Gehäuseeinheit aus dem Gehäuseunterteil 20 und der Wartungseinheit 10 kann anschließend wieder am nicht dargestellten Gehäuseoberteil befestigt werden. Alternativ ist es auch möglich, zunächst die Wartungseinheit 10 in das Gehäuseoberteil einzusetzen und anschließend das Gehäuseunterteil 20 daran zu montieren. Auch in diesem Falle greifen die einzelnen Komponenten in vorstehend beschriebener Weise ineinander.

## Patentansprüche

1. Ölfilter eines Verbrennungsmotors insbesondere für Kraftfahrzeuge, umfassend ein Filtergehäuse (1), eine in einem Innenraum (2) des Filtergehäuses (1) angeordnete auswechselbare Filterpatrone (3), sowie ein Ablaufventil (4) im Filtergehäuse (1), wobei das Ablaufventil (4) einen Ventilsitz (5) für einen Ventilkörper (6) aufweist, in dem der Ventilkörper (6) in einer parallel und insbesondere koaxial zu einer Längsachse (7) des Ölfilters liegenden, zum Innenraum (2) hin weisenden Öffnungsrichtung (8) verschiebbar ist, und wobei der Ventilkörper (6) in einer entgegen der Öffnungsrichtung (8) liegenden Schließrichtung (9) in den Ventilsitz (5) des Ablaufventils (4) eingesetzt ist, und wobei der Ventilkörper (6) zusammen mit der Filterpatrone (3) eine zum gemeinsamen Auswechseln vorgesehene Wartungseinheit (10) bildet, **dadurch gekennzeichnet, dass** der Ventilkörper (6) in der Schließrichtung (9) aus dem Filtergehäuse (1) herausdrückbar ist.

2. Ölfilter nach Anspruch 1, **dadurch gekennzeichnet, dass** der Ventilkörper (6) lösbar und insbesondere klemmend in einer Aufnahme (11) der Filterpatrone (3) gehalten ist.

3. Ölfilter nach Anspruch 1 oder 2, **dadurch gekennzeichnet, dass** der Ventilkörper (6) zusammen mit einem Dichtsitz (12) der Filterpatrone (3) ein Entleerventil (13) für eine Innenseite (14) der Filterpatrone (3) bildet.

4. Ölfilter nach einem der Ansprüche 1 bis 3, **dadurch gekennzeichnet, dass** der Ventilsitz (5) des Ablaufventils (4) eine auf den Ventilkörper (6) in der Öffnungsrichtung (8) einwirkende Rückhalteeinrichtung (15) aufweist.

5. Ölfilter nach Anspruch 4, **dadurch gekennzeichnet, dass** die Rückhalteeinrichtung (15) durch mindestens eine Federzunge (16) gebildet ist.

6. Ölfilter nach Anspruch 4 oder 5, **dadurch gekennzeichnet, dass** der Ventilsitz (5) des Ablaufventils (4) eine Ablauföffnung (17) aufweist, die bei Anlage des Ventilkörpers (6) an der Rückhalteeinrichtung (15) geöffnet ist.

7. Ölfilter nach den Anspruch 2, **dadurch gekennzeichnet, dass** die Aufnahme (11) für den Ventilkörper (6) durch den Dichtsitz (12) der Filterpatrone (3) gebildet ist, und dass der Ventilkörper (6) mittels eines Dichtringes (18) klemmend und im Übrigen frei herausziehbar in der Aufnahme (11) der Filterpatrone (3) gehalten ist.

## Claims

1. Oil filter of an internal combustion engine in particular for motor vehicles, comprising a filter housing (1), an exchangeable filter cartridge (3) disposed in an interior space (2) of the filter housing (1), as well as a drain valve (4) in the filter housing (1), wherein the drain valve (4) features a valve seat (5) for a valve body (6) in which the valve body (6) is displaceable in an opening direction (8) parallel and in particular coaxially to a longitudinal axis (7) of the oil filter and pointing towards the interior space (2) and wherein the valve body (6) is inserted into the valve seat (5) of the drain valve (4) in a closing direction (9) opposite to the opening direction (8) and wherein the valve body (6) forms together with the filter cartridge (3) a maintenance unit (10) provided for a common replacement, **characterized in that** the valve body (6) can be pressed out of the filter housing (1) in the closing direction (9).

2. Oil filter according to claim 1, **characterized in that** the valve body (6) is held detachably and in particular in a clamped position in a support (11) of the filter cartridge (3).

3. Oil filter according to claim 1 or 2, **characterized in that** the valve body (6) forms together with a sealing seat (12) of the filter cartridge (3) a drain valve (13) for an interior side (14) of the filter cartridge (3).

4. Oil filter according to one of the claims 1 to 3, **characterized in that** the valve seat (5) of the drain valve (4) features a retaining means (15) acting on the valve body (6) in the opening direction (8).

5. Oil filter according to claim 4, **characterized in that** the retaining means (15) is formed by at least one spring tab (16).

6. Oil filter according to claim 4 or 5, **characterized in that** the valve seat (5) of the drain valve (4) features a drain opening (17) which is opened when the valve body (6) contacts the retaining means (15).

7. Oil filter according to claim 2, **characterized in that** the support (11) for the valve body (6) is formed by the sealing seat (12) of the filter cartridge (3) and that the valve body (6) is held by means of a sealing ring (18) in a clamped position and moreover freely removably in the support (11) of the filter cartridge (3).

## Revendications

1. Filtre à huile d'un moteur de combustion interne en particulier pour des véhicules automobiles, comprenant un boîtier de filtre (1), une cartouche filtrante (3) échangeable disposée dans un espace intérieur (2) du boîtier de filtre (1), ainsi qu'une vanne d'écoulement (4) dans le boîtier de filtre (1), la vanne d'écoulement (4) présentant un siège de soupape (5) pour un corps de soupape (6) dans lequel le corps de soupape (6) peut être déplacé dans une direction d'ouverture (8) située de manière parallèle et en particulier coaxiale par rapport à un axe longitudinal (7) du filtre à huile et orientée vers l'espace intérieur (2), et le corps de soupape (6) étant inséré dans le siège de soupape (5) de la vanne d'écoulement (4) dans une direction de fermeture (9) opposée à la direction d'ouverture (8), et le corps de soupape (6) formant avec la cartouche filtrante (3) une unité d'entretien (10) destinée à l'échange commun, **caractérisé en ce que** le corps de soupape (6) peut être pressé hors du boîtier de filtre (1) dans la direction de fermeture (9).

2. Filtre à huile selon la revendication 1, **caractérisé en ce que** le corps de soupape (6) est maintenu de manière amovible et en particulier par serrage dans un logement (11) de la cartouche filtrante (3).

3. Filtre à huile selon la revendication 1 ou 2, **caractérisé en ce que** le corps de soupape (6) forme, avec un siège d'étanchéité (12) de la cartouche filtrante (3), une vanne de purge (13) pour une face intérieure (14) de la cartouche filtrante (3).

4. Filtre à huile selon l'une des revendications 1 à 3, **caractérisé en ce que** le siège de soupape (5) de la vanne d'écoulement (4) est pourvu d'un dispositif de retenue (15) agissant sur le corps de soupape (6) dans la direction d'ouverture (8).

5. Filtre à huile selon la revendication 4, **caractérisé en ce que** le dispositif de retenue (15) est formé par au moins une languette élastique (16).

6. Filtre à huile selon la revendication 4 ou 5, **caractérisé en ce que** le siège de soupape (5) de la vanne d'écoulement (4) présente une ouverture d'évacuation (17) qui est ouverte lorsque le corps de soupape (6) touche le dispositif de retenue (15).

7. Filtre à huile selon la revendication 2, **caractérisé en ce que** le logement (11) pour le corps de soupape (6) est formé par le siège d'étanchéité (12) de la cartouche filtrante (3) et que le corps de soupape (6) est maintenu par serrage, au moyen d'une bague d'étanchéité (18), dans le logement (11) de la cartouche filtrante (3) et, du reste, peut en être extrait librement.
